# EUROPEAN PATENT APPLICATION

(11) **EP 3 989 147 A1**
(43) Date of publication of application: **27.04.2022**
(21) Application number: 21150680.3
(22) Date of filing: 08.01.2021
(51) Int. Cl.: G06Q 10/10, G06Q 50/18, B42F 13/40

(54) **SYSTEM COMPRISING AN INTELLIGENT DOCUMENT BINDER THAT ALLOWS TO MANAGE EXPIRATIONS OR DELIVERIES OF DOCUMENTS**

(30) Priority: 26.10.2020 IT 202000025309
(71) Applicant: H24INVENT SRL, 30172 Mestre, Venezia (IT)
(72) Inventor: Ranzato, Enrico, 30172 Venezia (IT)
(74) Representative: Leganza, Alessandro

(57) **Abstract**

The present invention relates to a system comprising an intelligent document binder with integrated communication technology that allows the documents inserted inside to be synchronized on a smartphone and therefore allows to organize and optimize the management of expirations or deliveries of documents.

## Description

### Technical field

The present invention relates, in general, to a system for monitoring the expiry or delivery date of documents contained in a document binder and, more in particular, a system configured to inform a user about the expiry or delivery date of the documents.

### Background of the invention

Nowadays, the expirations or expiry dates of administrative, bureaucratic compliances, etc. as well as the delivery of some documents are an active and mandatory part of the daily life of adults, and, in particular, of all those people who are most exposed to work with administrations or public authorities, as, for example accountants, notaries, lawyers, technical consultants, etc.

Considering that, once a document, for example a letter, a declaration, a summons, etc. has been put away inside a document binder, for example a drawer or a DOX, especially in the presence of a large series of said binders, it becomes difficult, unless it is impossible, to remember the expiry or delivery date of said document.

This problem is even more accentuated by visually impaired users who have greater difficulty to recognize the binder that contains the document that is approaching to the expiration or that must be delivered by a specific date.

### Summary of the Invention

Therefore, the problem addressed by the present invention is that of providing a system for monitoring the expiry or delivery date of a document contained in a document binder, in order to overcome, or at least to limit, the drawbacks mentioned above.

In particular, the main object of the present invention is to provide a system for monitoring the expiry or delivery date of a document with the function of indicating to the user the imminent expiry or delivery date of a document, and such that it can operate in any storage environment of document, i.e. both in low temperature environments, for example inside cold archives, as well as in environments without light, for example inside closed cabinets with shelving.

Another object of the present invention is to provide a system for monitoring the expiry date of a document with the function of indicating to the user the imminent expiration or delivery of said document, which has a simplified structure and low production costs.

Not the least object of the present invention is to provide a system for monitoring the expiry or delivery date of a document contained in a document binder, as, for example, a drawer, a small drawer, a document tray, a cardboard archive folder, a ring binder, a small folder, folder or big folder in cardboard and/or plastic material, DOX type binder, etc., with the function of indicating to the user the imminent expiration or delivery of a document, which is easy and immediate its use.

An object of the invention relates, therefore, to a system (100) for monitoring the expiry or delivery date of documents comprising:
- at least one intelligent portable device (50),
- a document binder (30) suitable for containing documents, wherein said binder comprises at least one wireless communication module (40) configured to communicate with a corresponding wireless communication module (51) of an intelligent portable device (50).

It is evident how the presence of the wireless communication module (40) allows to inform a user about the expiration or delivery of the document.

Another object, is a method for monitoring the expiry or delivery date of a document.

Finally, another object, is a method for monitoring the expiry or delivery date of a document by a visually impaired user.

Further features and advantages of the system (100) and methods for monitoring the expiry and/or delivery date of a document will become clearer from the detailed description, from the description of preferred embodiments, of the embodiment examples of the invention, provided as an indication of the invention.

Preferred aspects of the invention are reported in the dependent claims.

### Brief description of the drawings

With reference to the annexed drawings, the following elements are considered:
(100) system for monitoring the expiry or delivery date of a document,
(90) document binder (30) suitable for containing documents inside comprising at least one wireless communication module (40),
(50) intelligent portable device,
(30) document binder,
(40) wireless communication module,
(51) wireless communication module of an intelligent portable device,
(41) a memory unit of the wireless communication module (40),
(70) visual signalling means,
(42) timer,
(71) LED,
(72) embossing of an alphanumeric or Braille character,
(53) sound communication means,
(52) application of the intelligent portable device.

Figure 1 is a semi-perspective view of a first embodiment, wherein the part (90) of the system (100) for monitoring the expiration or delivery of a document object of the present invention consists of:
   (30) document binder, (40) wireless communication module, (41) a memory unit inside the wireless communication module (40), (70) visual signalling means, (42) timer, (71) LED, (72) embossing of an alphanumeric or Braille character.
Figure 2A is a semi-perspective view of the inner part of a document binder (30) of the ring type, typically called DOX.
Figure 2B, is a semi-perspective view of a series of document binders (30) comprising wireless communication modules (40).
Figure 3 is a perspective view of the entire system (100) for monitoring the expiry or delivery date of a document object of the present invention, applied with a document binder (30), of the DOX type.
Figures 4 and 5 are diagrams which schematically show alternative operating modes of the system (100) object of the present invention. In particular, in Fig. 4, the approaching expiry or delivery date is indicated by means of the application of the intelligent portable device (52), while in Fig. 5 the approaching expiry date is indicated by visual signalling means (70).
Fig. 6 shows a perspective view of the wireless communication module (40) comprising an embossing of an alphanumeric or Braille character (72), in this specific case the letter "B". The letter, in this case, "B" is preferably the initial of the colour of the wireless communication module (40).

### Detailed description of the invention and of the preferred embodiments

With reference to Figures from 1 to 3, these show a first embodiment of the system (100) for monitoring the expiry and/or delivery date of documents according to the present invention.

In particular, an object of the present invention is a system (100) for monitoring the expiry or delivery date of documents comprising:
- at least one intelligent portable device (50),
- a document binder (30) suitable for containing documents, wherein said binder comprises at least one wireless communication module (40) configured to communicate with a corresponding wireless communication module (51) of an intelligent portable device (50).

It has been indeed surprisingly found that said combination of elements and means allows to effectively monitor the expiry or delivery date of a document.

According to a preferred embodiment, the documents are in paper form.

The term document binder (30) suitable for containing documents therefore comprises a document binder, document container, a drawer, a small drawer, a document tray, an archive folder in cardboard and/or plastic material, a ring binder, ring binder in cardboard and/or plastic material, a ring notebook, a small folder, folder or big folder in cardboard and/or material plastic, a DOX type binder, or similar document binders, etc.

According to a preferred embodiment, the document binder has the shape of a parallelepiped with a rectangular or square horizontal and vertical section, preferably rectangular.

Delivery date means a future time date on which the document must be delivered.

Indeed, the system (100) of the present invention has solved the problem of monitoring the expiry date and/or the date of delivery of documents.

In the following description, and in the annexed claims, the expression "intelligent portable device (50)" is understood to refer to any type of electronic portable device able to be connected to other devices or to a network by means of a communication protocol, such as Bluetooth^{®}, NFC, Wi-Fi, 3G, etc., which can operate in an interactive and autonomous manner. Examples of such intelligent portable devices include a smartphone, an iPhone^{®}, a palmtop computer or PDA (Personal Digital Assistant), a tablet, a laptop and similar devices.

In the following description, and in the annexed claims, the expression "document" is understood to refer to a document, which can be hosted or collected within the document binder. Said document can be constituted, by way of example, from one or more sheets of paper or cardboard, from a letter, etc.

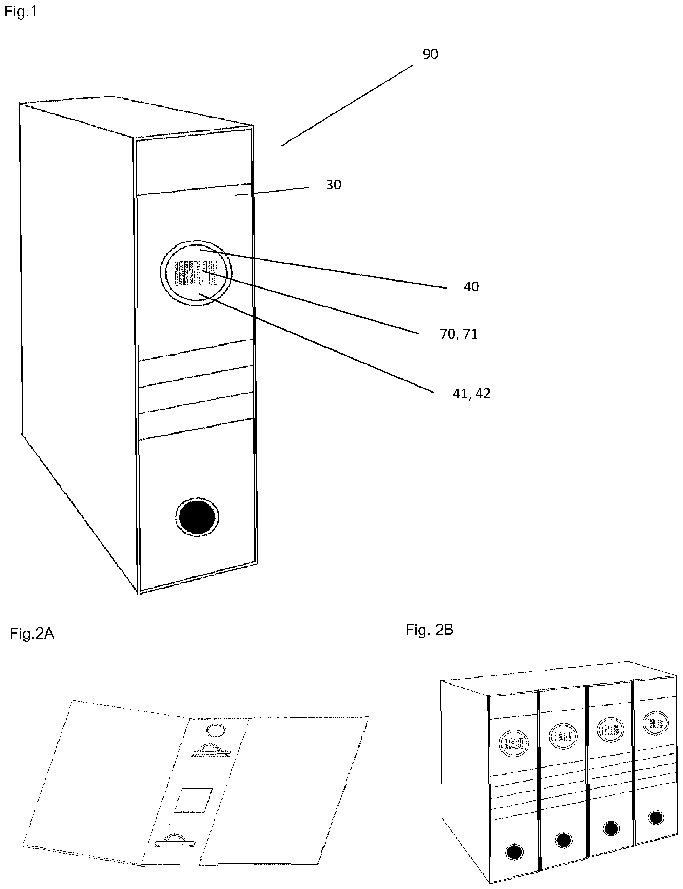

The document binder (30) is typically made of strong or flexible material, typically of cardboard, carton and/or plastic material. Inside it, optionally, there can be one or more rings suitable for holding documents or document holder envelopes (See Fig. 2A), or there may be spacers, etc.

The system (100) has a wireless communication module (40) linked or rather attached or rather included to the document binder (30). This a coupling can take place by means of mechanical fixing means and/or by welding, gluing, etc. Alternatively, this coupling can take place by means of a magnet, wherein the document binder (30) comprises an element made of ferromagnetic material and/or a magnet suitable for attaching to the wireless communication module (40).

According to a preferred embodiment, the wireless communication module (40) is placed on the outer front surface of the document binder (30).

Preferably, the wireless communication module (40) is a short-range wireless communication module, for example a Bluetooth^{®} wireless communication module or a NFC (Near Field Communication) wireless communication module.

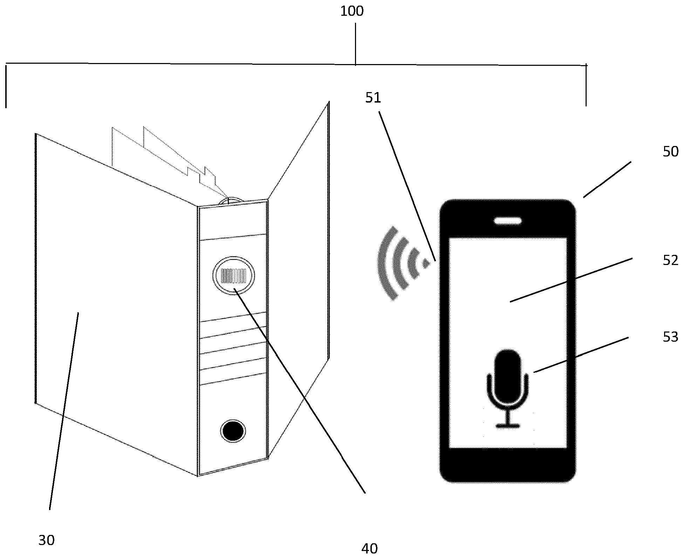

The wireless communication module (40) is configured to communicate with an intelligent portable device (50) of the user (see Figures 3, 4 and 5).

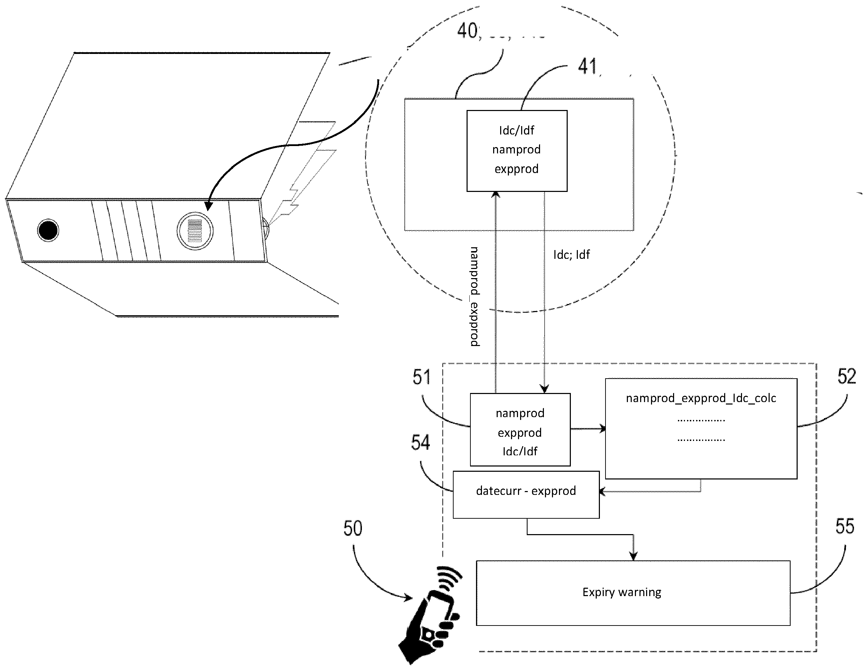

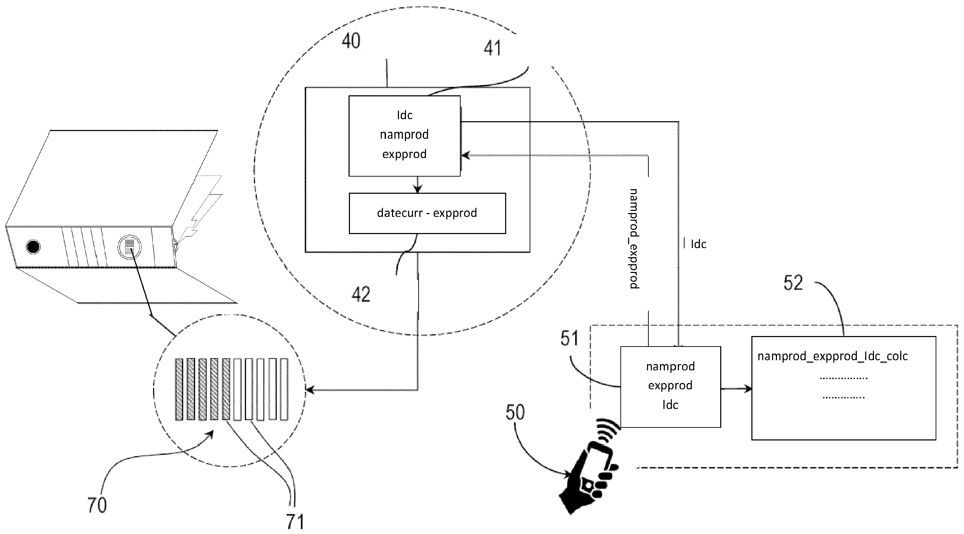

Preferably, and as shown schematically in Figures 4 and 5, the wireless communication module (40) comprises a memory unit (41) configured to store data relating to documents, specifically the name of the document and its expiry or delivery date, transmitted to the wireless communication module (40) from the intelligent portable device (50).

For this purpose, and as shown in detail in Figures 4 and 5, the intelligent portable device (50) comprises a wireless communication module (51), preferably, analogous to the wireless communication module (40) of the document binder, and an application (52). Inside the memory unit (41) of the wireless communication module (40) is moreover stored an identification code of the wireless communication module (40) of the document binder (30) (as a whole (90)).

In an alternative embodiment, shown in Figure 5, the wireless communication module (40) of the document binder (30) further comprises visual signalling means (70), configured to indicate to the user how many days are left before the expiry or delivery date of a document contained in the binder (30) comprising the at least one wireless communication module (40) (as a whole (90)).

In particular, the visual signalling means (70) are provided on the outer surface of the wireless communication module (40) opposite to that of the document binder (30). Preferably, the visual signalling means (70) are provided at the centre of the external surface of the wireless communication module (40) opposite to that of the document binder (30), so as to be easily and immediately visible by the user. Certainly, the visual signalling means can be positioned at any other point of the wireless communication module (40), provided they satisfy the condition of being visible to the user.

In the embodiment shown in Figures 1, 3, 5 and 6 the visual signalling means (70) comprise an array of LEDs (Light Emitting Diodes) 71, for example ten LEDs, one for each day left before to the expiration.

In this variant embodiment, the wireless communication module (40) is a wireless communication module of the active type, preferably an active NFC module, which comprises a timer (42).

The timer (42) is configured to perform a countdown between a current date datecurr and the expiry date expprod of the document linked with the wireless communication module (40) and, as to this approaching expiry date expprod, to activate the lighting-up of a number of LEDs (71) equal to the number of days left before the expiry or delivery date of the document.

The wireless communication module (40) further comprises battery power supply means of known type (not shown) for the LEDs 71 and the timer 42.

With reference to Figure 4, the operation of the system (100) for monitoring the expiry or delivery date of documents according to the present invention is now described.

In the following of this description reference will be made, as an intelligent portable device (50), to a smartphone or I-Phone^{®} (50), but it is understood that the comments are also applicable to any intelligent portable device available to the user and suitable for purpose.

Firstly, the user, by means of the application (52) being present inside the smartphone (50), enters the name namprod and expiry or delivery date expprod of a document. For example <writ of summons; 1_october_2020>.

Subsequently, the user moves the smartphone (50) towards the wireless communication module (40) of the document binder (30), typically at a distance no more than 10 cm, where the smartphone (50) is able to detect the presence of the wireless communication module (40).

At this point, the wireless communication module (40) and the wireless communication module (51) of the smartphone (50) are able to communicate with each other.

In particular:
- the wireless communication module (40) transmits to the wireless communication module (51) of the smartphone (50), the identification code Idc of said communication module (40), which is stored in the memory (41); and
- the wireless communication module (51) of the smartphone (50) transmits to the wireless communication module (40) name namprod and expiry date or delivery date expprod of the previous document entered by the user through the application (52) of the smartphone (50), for example <writ of summons; 1_october_2020>.

These data are stored, together with the identification code Idc, in the memory (41) of the wireless communication module (40).

Following this exchange of information, there is an association between the document contained in the binder (30), expiry or delivery date of the document and wireless communication module (40) of the document binder (30). This an association, for example <writ of summons; 1_october_2020_Idc> or <insurance_car- 29_novembre_2020_Idf> is present both in the memory (41) of its wireless communication module (40) and in the application (52) of the smartphone (50).

Preferably, a colour is associated with the wireless communication module (40) and/or with the document binder (30). More preferably, both the wireless communication module (40) and the document binder (30) are coloured, preferably (40) and (30) are of the same colour. It follows that, by means of the application (52), the user can associate with a document, expiry or delivery date, identification code Idc or Idf wireless communication module (40) as well the corresponding colc or coif colour, for example, in the case of the wireless communication module (40) <writ of summons; 1_october_2020_Idc_red>.

A completely similar procedure can be followed for any wireless communication module (40) of the document binder (30) available of the user.

The smartphone (50) includes a timer (54), by means of which the application (52) can perform a countdown between the current date datecurr and the expiry or delivery date expprod of each document and, close to this expiry date expprod, for example when there are two days left before the expiration of the document, i.e. expprod - datecurr = 2, display on the screen (55) of the smartphone (50), for each document, an "imminent expiry" warning.

The user is thus informed that, for example, the document contained in the document binder (30) comprising the communication module (40) of red colour is expiring and therefore must be renewed (for example the insurance policy or the rights for the maintenance of an Industrial Property Right).

Assume that, alternatively, the user wishes to know the expiry date of one or more documents contained, for example, in a shelving comprising many document binders (30).

For this purpose, the user moves the smartphone (50) towards the wireless communication modules (40) linked to the documents of interest. The wireless communication module (40) then transmits to the wireless communication module (51) of the smartphone (50) the name namprod and expiry date expprod of the documents contained in the binder (30), and this information is displayed by means of the application (52), on the screen (55) of the intelligent portable device (50) in the form of an "imminent expiration" warning.

Once the expiry or delivery date has passed, and the reminder about their expiration is no longer needed, the document binder (30) comprising at least one wireless communication module (40) that could be used for another document.

For this purpose, the memory (41), of the wireless communication module (40) can be deleted and it is possible to store on it, according to the pmethod described above, name and expiry or delivery date of a new document.

With reference to Figure 5, the operation of the system (100) is now described, in its embodiment comprising a wireless communication module (40)of the active type, a timer (42) and visual signalling means (70).

Also in this case, as described above with reference to Figure 4, firstly the user, by means of the application (52) being inside the smartphone (50), enters the name namprod and expiry or delivery date expprod of a document linked to the wireless communication module (40).

Subsequently, the user moves the smartphone (50) towards the wireless communication module (40), typically at a distance not more than 10 cm, wherein the smartphone (50) is able to detect the presence of the wireless communication module (40).

At this point, the wireless communication module (40) and the wireless communication module (51) of the smartphone (50) are able to communicate each other.

In particular:
- the wireless communication module (40) transmits to the wireless communication module (51) of the smartphone (50) an identification code Idc of the wireless communication module (40); and
- the wireless communication module (51) of the smartphone (50) transmits to the wireless communication module (40) name namprod and expiry or delivery date expprod of the previous document entered by the user. These data are stored, together with the identification code Idc, in the memory (41) of the wireless communication module (40).

Following this exchange of information, there is an association between the document contained in the document binder (30) comprising the wireless communication module (40), expiry or delivery date of the document and the wireless communication module (40).

As described previously, a colour is preferably associated with the wireless communication module (40), and/or with the document binder (30). It follows that, by means of the application (52), the user can associate with a document, expiry date, Idc identification code of the wireless communication module (40), also the related colc colour.

At this point, assume that the user wishes to know whether the document linked to the wireless communication module (40) is expiring.

For this purpose, the user moves the smartphone (50) towards wireless communication module (40), in order to activate the wireless communication module (40), in particular the timer (42). Once activated, the timer performs a countdown between the current date datecurr and the expiry or delivery date expprod of the document and activates the lighting-up of a number of LEDs, for example five LEDs, equal to the number of days left before the expiration. The user is then informed that the document will expire or must be delivered within five days.

According to a preferred embodiment, the system (100) comprises an identification code (Idc; Idcop), said wireless communication module (40) being configured to transmit to the intelligent portable device (50) said identification code (Idc; Idcop).

According to a preferred embodiment, the wireless communication module (40) comprises a memory unit (41), and wherein the wireless communication module (51) of the intelligent portable device (50) being configured to transmit to the wireless communication module (40) name (namprod) and expiry or delivery date (expprod) of a specific document contained in a document binder (30), wherein said name (namprod) and expiry or delivery date (expprod) have been previously entered into the intelligent portable device (50) by means of an application (52) of the intelligent portable device (50), the name (namprod) and the expiry or delivery date (expprod) being stored in said memory unit (41).

According to a preferred embodiment, the wireless communication module (40) of the system (100) is also configured to transmit to the intelligent portable device (50) said name (namprod) and expiry or delivery date (expprod), therein previously stored in the memory unit (41).

According to a preferred embodiment, the system (100) further comprising visual signalling means (70) and a timer (42) in electrical communication with said visual signalling means (70), said timer (42) being configured to perform a countdown between a current date (datecurr) and the expiry or delivery date of the document (expprod) and activate the lighting-up of the visual signalling means (70).

According to a preferred embodiment, the aforementioned visual signalling means (70) comprise an array of LEDs (71) and wherein said timer (42) is configured to activate the lighting-up of a number of LEDs (71) equal to the difference between the expiry or delivery date of the document (expprod) and current date (datecurr).

According to a preferred embodiment of the system (100),
- the wireless communication module (40) comprises an embossing of an alphanumeric or Braille character (72) on its outer surface opposite to that of the document binder (30) and
- the intelligent portable device (50) further comprises sound communication means (53). This preferred embodiment is indeed very useful for visually impaired users, allowing them to use the system (100) more effectively.

Alphanumeric or Braille character (72) means an alphabetic letter or a number or a letter or a number written in Braille writing.

Sound communication means (53) means that the intelligent portable device (50) has vocal commands or vocal or sound notifications, for example through a loudspeaker or headphones.

According to a preferred embodiment, the alphanumeric or Braille character (72) is an alphabetic letter, preferably capital letter, which is the initial of the colour that presents the wireless communication module (40) and/or the document binder (30).

Another object is a method for monitoring expiration of a document by the system (100) described above, including preferred embodiments, comprising the following steps:
a) putting the document inside the document binder (30) including at least one wireless communication module (40),
b) by means of the application (52) of the intelligent portable device (50), entering the name (namprod) and expiry or delivery date (expprod) of said document
c) the intelligent portable device (50) transmits the data of step b) to the wireless communication module (40) which stores them in the memory unit (41),
d) the wireless communication module (40) by means of visual signalling means (70) and a timer (42), displays the residual duration time before the expiry or delivery date of the document; or, alternatively, upon activation of the application (52) of the intelligent portable device (50), the intelligent portable device (50) warns the user of the approaching expiry or delivery date of the document.

Steps a) and b) can also be reversed.

Another object is a method for visually impaired users for monitoring the expiry or delivery date of a document by the system (100) described above, including preferred embodiments, comprising the following steps:
a1) putting the document into the document binder (30) comprising at least one wireless communication module (40), wherein said communication module (40) comprises an embossing of an alphanumeric or Braille character (72) on its outer surface opposite to that of the document binder (30),
b1) by means of the application (52) of the intelligent portable device (50), entering the name (namprod) and expiry or delivery date (expprod) of said document,
c1) the intelligent portable device (50) transmits the data of step b1) to the wireless communication module (40) comprising an embossing of an alphanumeric or Braille character (72) which stores said data in the memory unit (41),
d1) optionally, the wireless communication module (40) by means of visual signalling means (70) and a timer (42), displays the residue duration time before the expiry or delivery date of the document,
e1) by means of the activation of the application (52) of the intelligent portable device (50), the intelligent portable device (50) by sound communication means (53) warns the visually impaired user of the approaching expiry or delivery date of the document, moreover specifying the alphanumeric or Braille character of the wireless communication module (40), f1) the user, through finger contact on the embossing alphanumeric or Braille character (72) of the communication module (40), recognizes the binder containing the document close to expiration or delivery.

Steps a1) and b1) can also be reversed.

It is evident that said method is particularly advantageous for visually impaired subjects since it allows them to effectively monitor their expiry dates of own documents.

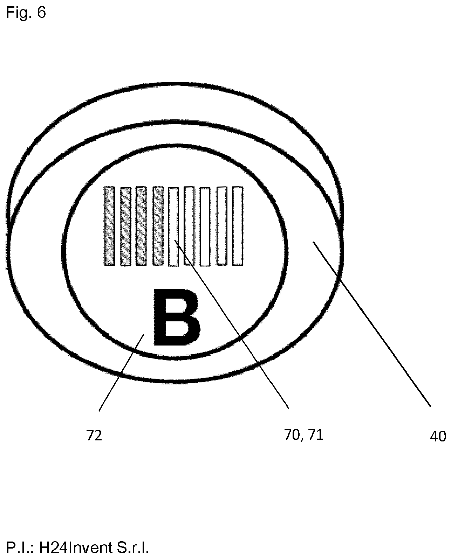

Preferably, in step a1) the embossing of an alphanumeric or Braille character (72) is one letter, preferably capital letter, which is the initial of the colour of the wireless communication module (40) and of the document binder (30); for example a communication module (40) and document binder (30)both white will have the embossing of the letter "B" on the wireless communication module (40) (See Fig. 6).

In conclusion, the invention relates to a system comprising an intelligent document binder with integrated communication technology which allows synchronize on a smartphone or other portable communication device the documents insert in it and remember their expiry and/or delivery date. Therefore, the system (100) allows to better organize and manage expiration and/or deliveries of documents.

From the above-mentioned description, the features of the system for monitoring the expiry or delivery date of a document object of the present invention are clear, thus, as the relative advantages are clear.

Further variants of the embodiment described above are possible, without departing from the teaching of the invention. Finally, it is clear that the system for monitoring the expiration or delivery of documents thus designed is subject to numerous modifications and variations; moreover, all the details can be replaced by technically equivalent elements. Basically, the materials used, as well as the dimensions, may be any according to the technical requirements.

## Claims

1. A system (100) for monitoring the expiry or delivery date of documents comprising:
- at least one intelligent portable device (50),
- a document binder (30) suitable for containing documents, wherein said binder comprises at least one wireless communication module (40) configured to communicate with a corresponding wireless communication module (51) of an intelligent portable device (50).

2. System (100) according to claim 1, wherein the wireless communication module (40) is placed on the outer front surface of the document binder (30).

3. System (100) according to any one of claims from 1 to 2, wherein said system (100) comprises an identification code (Idc; Idcop), said wireless communication module (40) being configured to transmit to the intelligent portable device (50) said identification code (Idc; Idcop).

4. System (100) according to any one of claims from 1 to 3, wherein the wireless communication module (40) comprises a memory unit (41), and wherein the wireless communication module (51) of the intelligent portable device (50) being configured to transmit to the wireless communication module (40) name (namprod) and expiry or delivery date (expprod) of a specific document contained in a document binder (30), wherein said name (namprod) and expiry or delivery date (expprod) have been previously entered into the intelligent portable device (50) by means of an application (52) of the intelligent portable device (50), the name (namprod) and the expiry or delivery date (expprod) being stored in said memory unit (41).

5. System (100) according to any one of claims from 1 to 4, wherein said wireless communication module (40) of the system (100) is also configured to transmit to the intelligent portable device (50) said name (namprod) and expiry or delivery date (expprod), therein previously stored in the memory unit (41).

6. System (100) according to any one of claims from 1 to 5, comprising visual signalling means (70) and a timer (42) in electrical communication with said visual signalling means (70), said timer (42) being configured to perform a countdown between a current date (datecurr) and the expiry or delivery date of the document (expprod) and activate the lighting-up of the visual signalling means (70).

7. System (100) according to claim 6, in which said visual signalling means (70) comprise an array of LEDs (71) and wherein said timer (42) is configured to activate the lighting-up of a number of LEDs (71) equal to the difference between the expiry or delivery date of the document (expprod) and current date (datecurr).

8. System (100) according to any one of claims from 1 to 7, wherein:
- the wireless communication module (40) comprises an embossing of an alphanumeric or Braille character (72) on its outer surface opposite to that of the document binder (30) and
- the intelligent portable device (50) further comprises sound communication means (53).

9. System (100) according to claim 8, wherein the alphanumeric or Braille character (72) is an alphabetic letter, which is the initial of the colour that presents the wireless communication module (40) and/or the document binder (30).

10. Method for monitoring the expiry or delivery date of a document by the system according to any one of claims from 1 to 9 comprising the following steps:
a) putting the document inside the document binder (30) including at least one wireless communication module (40),
b) by mean of the application (52) of the intelligent portable device (50), entering the name (namprod) and expiry or delivery date (expprod) of said document
c) the intelligent portable device (50) transmits the data of step b) to the wireless communication module (40) which stores them in the memory unit (41),
d) the wireless communication module (40) by means of visual signalling means (70) and a timer (42), displays the residual duration time before the expiry or delivery date of the document; or, alternatively, upon activation of the application (52) of the intelligent portable device (50), the intelligent portable device (50) warns the user of the approaching expiry or delivery date of the document.

11. Method for visually impaired users for monitoring the expiration or delivery date of a document by the system according to any one of claims from 1 to 9 comprising the following steps:
a1) putting the document into the document binder (30) comprising at least one wireless communication module (40), wherein said communication module (40) comprises an embossing of an alphanumeric or Braille character (72) on its outer surface opposite to that of the document binder (30),
b1) by means of the application (52) of the intelligent portable device (50), entering the name (namprod) and expiry or delivery date (expprod) of said document,
c1) the intelligent portable device (50) transmits the data of step b1) to the wireless communication module (40) comprising an embossing of an alphanumeric or Braille character (72) which stores said data in the memory unit (41),
d1) optionally, the wireless communication module (40) by means of visual signalling means (70) and a timer (42), displays the residue duration time before the expiry or delivery date of the document,
e1) by means of the activation of the application (52) of the intelligent portable device (50), the intelligent portable device (50) by sound communication means (53) warns the visually impaired user of the approaching expiry or delivery date of the document, moreover specifying the alphanumeric or Braille character of the wireless communication module (40),
f1) the user, through finger contact on the embossing alphanumeric or Braille character (72) of the communication module (40), recognizes the binder containing the document close to expiration or delivery.

12. Method according to claim 11, wherein in step a1) the embossing of an alphanumeric or Braille character (72) is one letter, which is the initial of the colour of the wireless communication module (40) and of the document binder (30);

13. Use of a wireless communication module (40) configured to communicate with a corresponding wireless communication module (51) of an intelligent portable device (50) for monitoring the expiry or delivery date of documents.

14. Use a system (100) according to any one of claims from 1 to 9 for monitoring the expiry or delivery date of documents.
